Europäisches Patentamt

European Patent Office

Office européen des brevets

(19)

(11) **EP 0 263 730 B1**

(12) **FASCICULE DE BREVET EUROPEEN**

(45) Date de publication et mention
de la délivrance du brevet:
**06.12.2000 Bulletin 2000/49**

(51) Int. Cl.$^7$: **H04N 5/32**

(21) Numéro de dépôt: 87402005.0

(22) Date de dépôt: **08.09.1987**

(54) **Installation de radiologie à caméra de télévision à élément de prise de vues de faible rémanence**

Videokamera mit schwacher Remanenz der Bildaufnahmevorrichtung für Röntgenanlagen

Video camera with a weak remanence pick-up device for radiology installations

(84) Etats contractants désignés:
**DE GB NL**

(30) Priorité: **12.09.1986 FR 8612818**

(43) Date de publication de la demande:
**13.04.1988 Bulletin 1988/15**

(73) Titulaire:
**GE MEDICAL SYSTEMS S.A.**
**92130 Issy les Moulineaux (FR)**

(72) Inventeur: **Ploix, Jean-Luc**
**F-75008 Paris (FR)**

(74) Mandataire:
**Schmit, Christian Norbert Marie et al**
**Cabinet Ballot-Schmit**
**7, rue Le Sueur**
**75116 Paris (FR)**

(56) Documents cités:
**GB-A- 2 122 050          US-A- 4 394 684**

**Description**

L'invention est relative à une installation d'imagerie, notamment pour la radiologie, comportant une caméra de télévision à dispositif de prise de vues ne présentant pas de rémanence ou une faible rémanence.

Une installation de radioscopie comprend, en général, une caméra de télévision pour l'observation des images fournies par un amplificateur de luminance transformant une image aux rayons X en une image en lumière visible. La caméra permet l'observation des images sur un moniteur de type télévision. Dans une installation de radiologie dite "numérique" les signaux analogiques fournis par la caméra sont convertis en signaux numériques, ce qui facilite le traitement des signaux afin, notamment, d'augmenter la qualité des images sur le moniteur.

Dans ces installations de type numérique on utilise habituellement des tubes de prise de vues de type plumbicon ou saticon dont les éléments photodétecteurs ont une très faible rémanence. La rémanence d'un photo-détecteur est la propriété qu'a ce dispositif, après réception d'une impulsion lumineuse pendant une trame (image de télévision), de fournir à la trame suivante (ou aux trames suivantes)-après disparition de cette impulsion lumineuse-un signal électrique qui décroit avec le temps. Autrement dit, un photo-détecteur garde en mémoire pendant un certain temps le signal lumineux reçu. Une forte rémanence signifie une faible décroissance du signal avec le temps et, inversement, une faible rémanence signifie une forte décroissance du signal fourni par le dispositif de prise de vues.

Une faible rémanence peut constituer un inconvénient gênant, notamment dans les installations de radiologie car, dans ces dernières, on cherche à utiliser la plus faible dose possible de rayonnement X pour le patient, ce qui a pour conséquence une diminution du rapport signal à bruit en raison des fluctuations d'origine quantique, et la rémanence, qui constitue une intégration dans le temps, limite ces fluctuations.

C'est pourquoi dans les installations de radioscopie à tube de prise de vues de type plumbicon ou saticon on introduit artificiellement une rémanence à l'aide d'un filtre récursif.

Ce filtre est, en général, réalisé à l'aide d'une programmation des moyens numériques de traitement.

L'inventeur a constaté que-dans de telles installations de radiologie à caméra de télévision dont les éléments photo-détecteurs ont une faible rémanence-les images mobiles présentaient un flou prohibitif alors que ce défaut est beaucoup moins apparent avec les installations de radiologie utilisant des caméras à tube Vidicon ou chalnicon.

Partant de ces constatations, l'inventeur a découvert que la différence de comportement entre les caméras à faible et à forte rémanence provenaient du fait que dans les tubes du type vidicon à forte rémanence, cette rémanence varie avec le niveau du signal : elle est d'autant plus forte que le niveau est faible. En d'autres termes pour les forts signaux (en général les blancs) le maintien en mémoire est moins important que pour les faibles signaux. Cette propriété du tube vidicon est favorable à l'observation, par l'oeil humain, de l'image sur le moniteur de télévision. En effet, pour les zones sombres de l'image le bruit quantique est d'autant plus gênant que le signal est faible ; en outre l'oeil est très sensible aux faibles luminosités : il sera donc plus gêné par les fluctuations dans les zones sombres que dans les zones claires de l'image. La rémanence plus forte dans les zones sombres que dans les zones claires constitue donc bien un avantage pour les zones sombres. Pour les zones claires la faible rémanence permet de limiter, pour les images mobiles, le trainage ou chevauchement de ces zones claires sur les zones sombres, ce qui diminue l'aspect de "file", et donc de flou, de l'image.

Jusqu'à présent avec un tube de prise de vues à faible rémanence on crée une rémanence artificielle indépendante du niveau, qui est suffisante pour diminuer le bruit, c'est-à-dire les fluctuations d'origine quantique, dans les zones sombres, mais insuffisante pour empêcher le flou des images mobiles.

Les documents GB-A-2 122 050 et US-A 4 394 684 précisant à cet effet que la rémanence artificielle est réalisée à l'aide de filtres récursifs linéaires.

Dans l'installation selon l'invention la rémanence artificielle est variable avec le niveau du signal. Avec un tube de type plumbicon ou saticon on choisira une rémanence artificielle plus importante pour les zones sombres que pour les zones claires. Pour les tubes dans lesquels le bruit est plus important dans les zones claires que dans les zones sombres la rémanence artificielle variera à l'inverse en fonction du niveau, c'est-à-dire qu'elle sera plus importante à fort niveau qu'à faible niveau.

Dans ce qui suit, on ne décrira que des exemples de rémanence plus importante à faible niveau qu'à fort niveau.

Dans le mode de réalisation préféré de l'invention le filtre récursif est tel qu'il simule la rémanence du tube vidicon.

D'autres caractéristiques et avantages de l'invention apparaîtront avec la description de certains de ses modes de réalisation, celle-ci étant effectuée en se référant aux dessins ci-annexés, sur lesquels :

La figure 1 représente un filtre récursif,

la figure 2 est un diagramme de rémanence de deux tubes vidicon,

la figure 3 est un diagramme représentant une fonction dépendant de la rémanence également pour deux tubes vidicon,

la figure 4 reproduit le diagramme de la figure 2 avec, en plus, un diagramme analogue pour un tube plumbicon associé à des filtres selon l'invention,

la figure 5 reproduit le diagramme de la figure 3 avec, en plus, un diagramme analogue pour un tube plumbicon associé à d'autres réalisations de filtre selon l'invention, et

la figure 6 est un diagramme analogue à celui de la figure 4 mais pour un tube plumbicon associé à des variantes de réalisation de filtre selon l'invention.

L'exemple qu'on va décrire en relation avec les figures se rapporte à une installation de radiologie numérique comprenant une caméra de télévision de type plumbicon.

Dans une telle installation le signal analogique correspondant à chaque point de l'image est converti en un signal numérique qui peut subir diverses transformations avant d'être reconverti en un signal analogique appliqué sur un moniteur de télévision.

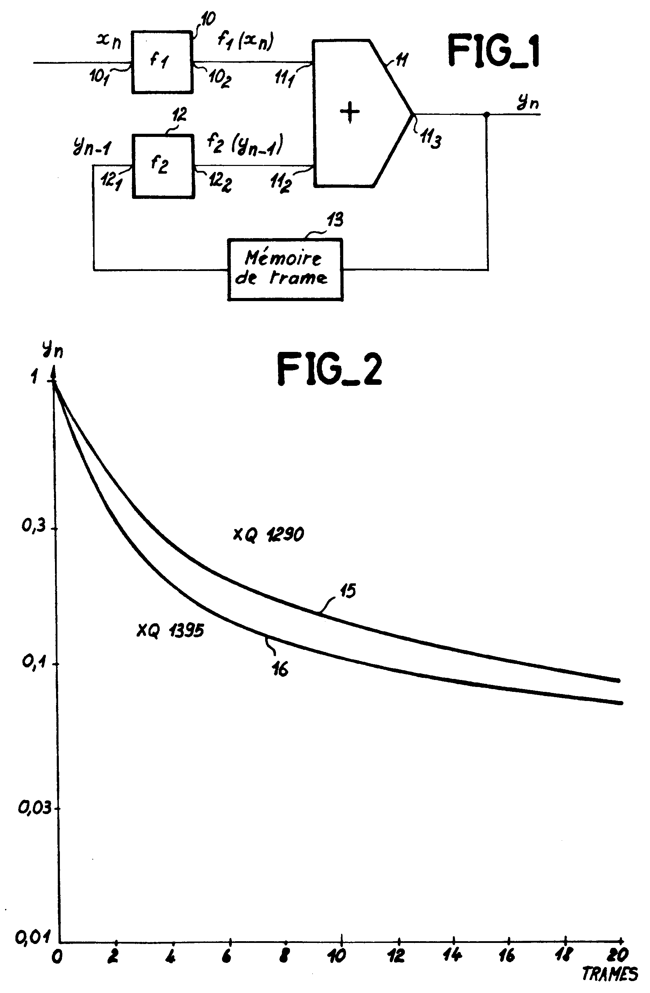

Parmi les traitements que subissent les signaux numériques on prévoit celui permettant de conférer une rémanence artificielle. Ce traitement est effectué à l'aide d'un filtre récursif représenté sur la figure 1.

Ce filtre présente un premier modulateur 10 dont l'entrée $10_1$ reçoit le signal $x_n$ d'entrée du filtre et dont le signal sur la sortie $10_2$ est la fonction $f_1(x_n)$ du signal d'entrée. La sortie $10_2$ du modulateur 10 est raccordée à la première entrée $11_1$ d'un additionneur 11 dont la seconde entrée $11_2$ reçoit le signal de sortie $f_2(y_{n-1})$ d'un second modulateur 12 dont l'entrée $12_1$ est reliée à la sortie $11_3$ de l'additionneur par l'intermédiaire d'une mémoire de trame 13. Le signal $y_n$ en sortie de l'additionneur 11 constitue le signal de sortie du filtre.

Le signal $y_{n-1}$ à l'entrée $12_1$ du second modulateur 12 correspond au signal qui se présentait sur la sortie $11_3$ à la trame précédente.

Le signal $y_n$ en sortie du filtre satisfait à la relation suivante:

$$y_n = f_1(x_n) + f_2(y_{n-1}) \qquad (1)$$

Un signal x constant à l'entrée du filtre doit se retrouver en sortie. Il en résulte que les fonctions $f_1$ et $f_2$ doivent satisfaire à la condition suivante:

$$x = f_1(x) + f_2(x) \qquad (2)$$

Habituellement un filtre récursif est du type linéaire, c'est-à-dire que les fonctions $f_1$ et $f_2$ sont :

$$f_1(x) = (1-\lambda) x \qquad (3)$$

$$f_2(x) = \lambda x \qquad (4)$$

Dans ces formules $\lambda$ est une constante qui caractérise la rémanence.

L'invention prévoit de conférer une non-linéarité au filtre récursif. Cette non-linéarité est déduite d'une analyse, qui a été effectuée dans le cadre de l'invention, du comportement des tubes vidicon. Cette analyse est exposée ci-après.

Dans le cadre de cette analyse, pour simplifier, on suppose que le signal de valeur maximum est 1 et que le signal minimum est 0.

On assimile un tube vidicon à un filtre récursif. Avec un tel filtre lorsque le signal d'entrée passe de la valeur maximum 1 à la valeur minimum 0 le signal de sortie est :

$$y_n = f_2(y_{n-1}) + f_1(0) \qquad (5)$$

Sur le diagramme de la figure 2 on a porté en abscisses les numéros de trames et en ordonnées le niveau du signal (compris entre 0 et 1). Ces ordonnées sont de type logarithmique.

On a étudié deux tubes vidicon, l'un de type XQ 1290 et l'autre de type XQ 1395. Pour chacun de ces tubes on a mesuré le signal $y_n$ à chaque trame et on a relié les divers points. Pour le tube vidicon XQ 1290 on obtient ainsi la courbe 15 et pour le tube XQ 1395 on obtient la courbe 16.

On constate que le rapport

$$\frac{y_{n+1}}{y_n}$$

décroit lorsque n augmente, c'est-à-dire que la rémanence augmente avec n. Autrement dit encore, la rémanence augmente lorsque le niveau du signal diminue.

On caractérise cette rémanence variable avec le niveau par les deux paramètres suivants :

$$\lambda = \frac{y_{n+1}}{y_n} \text{ pour n grand, et} \qquad (6)$$

$$\mu = \frac{y_1}{y_o} \qquad (7)$$

$\lambda$ est un paramètre caractéristique de la rémanence à faible niveau et $\mu$ un paramètre représentant la rémanence à fort niveau. Sur le diagramme de la figure 2, $\lambda$ correspond à la pente de la courbe 15 ou 16 pour les numéros élevés de trame et $\mu$ à la pente de cette courbe 15 ou 16 à l'origine.

Pour caractériser le comportement du tube lorsque le signal d'entrée est ramené de 1 à 0 l'inventeur a été amené à définir une fonction g (x) telle que :

$$f_2 (x) = x [\lambda (1-g (x)) + \mu \, g (x)] \qquad (8)$$

Avec : g(0) = 0, et g(1) = 1.

Pour les faibles valeurs de x (faible niveau du signal) on obtient :

$$f_2 (x) = \lambda \, x \qquad (9)$$

Pour x = 1 (les forts niveaux du signal) on obtient :

$$f_2 (1) = \mu \, x \qquad (10)$$

On voit qu'ainsi la fonction g (x) caractérise bien le passage du comportement de la rémanence de faible niveau à la rémanence de fort niveau.

Cette fonction g (x) peut se déduire de la courbe 15 ou 16 (tracée expérimentalement) à partir de la relation suivante :

$$g \, ( y_n ) = \frac{1}{\mu - \lambda} \left[ \frac{y_{n+1}}{y_n} - \lambda \right] \qquad (11)$$

Cette relation (11) résulte, d'une part, de la formule (8) qui amène la relation suivante :

$$g \, (x) = \frac{1}{\mu - \lambda} \left[ \frac{f_2(x)}{x} - \lambda \right] \qquad (12)$$

et, d'autre part, de la relation (5) ci-dessus, de laquelle on déduit:

$$f_2 \, (y_{n-1}) = y_n - f_1 \, (0) \, ; \qquad (13)$$

dans cette dernière relation $f_1$ (0) s'écrit :

$$f_1 \, (0) = 0 - f_2 \, (0) = 0 \, ; \text{ d'où :} \qquad (14)$$

$$\frac{f_2\,(y_{n\text{-}1})}{y_{n\text{-}1}} = \frac{y_n}{y_{n-1}} \tag{15}$$

Ce qui justifie ainsi la relation (11).

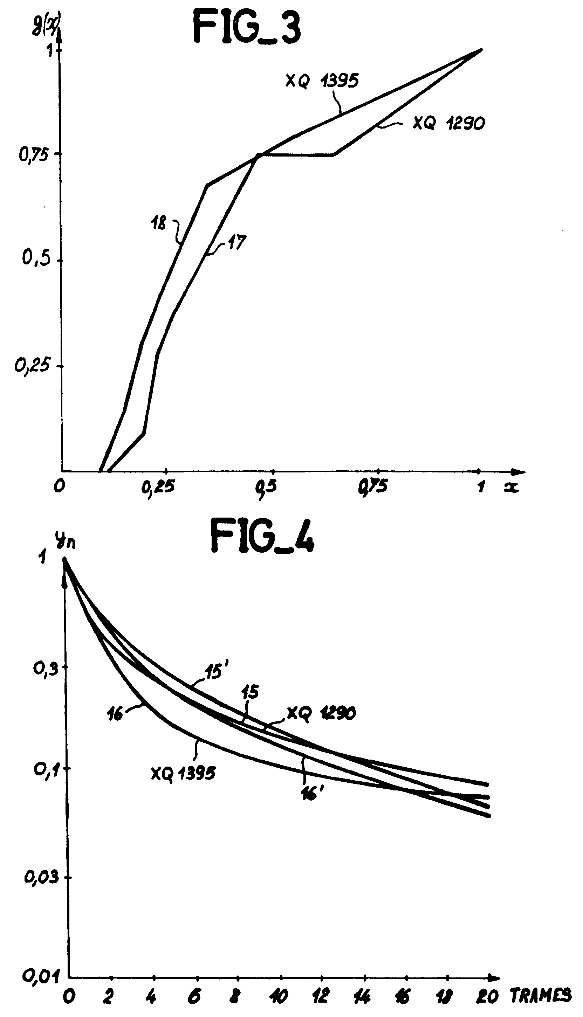

Sur le diagramme de la figure 3 on a porté en ordonnées la fonction g (x) et en abscisses la variable x. La courbe 17 correspond au tube vidicon XQ 1290 et la courbe 18 au tube vidicon XQ 1395.

Selon l'invention on prévoit un filtre récursif associé à un tube plumbicon qui présente des fonctions de modulation $f_1$ et $f_2$ se déduisant des courbes 17 ou 18 ou d'approximations de ces courbes. Autrement dit, on prévoit des filtres récursifs à fonctions $f_1$ et $f_2$ permettant de simuler le comportement des tubes vidicon.

Dans une première réalisation, très simple, on assimi le les courbes 17 et 18 à des droites, c'est-à-dire qu'on effectue une approximation linéaire telle que :

$$g\,(x) = x \tag{16}$$

Dans ces conditions :

$$f_1\,(x) = (\lambda\text{-}\mu)\,x^2 + (1\text{-}\lambda)\,x \tag{17}$$

$$f_2\,(x) = (\mu\text{-}\lambda)\,x^2 + \lambda x \tag{18}$$

De la formule (11) ci-dessus on déduit la loi de rémanence liant $y_{n+1}$ et $y_n$ :

$$y_{n+1} = (\mu\text{-}\lambda)\,y_n^2 + \lambda\,y_n \tag{19}$$

Sur le diagramme de la figure 4, analogue à celui de la figure 2, on a reporté les courbes 15 et 16 ainsi que les courbes 15' et 16' qui correspondent à l'approximation linéaire, ces courbes ayant été calculées à l'aide de la formule (19) ci-dessus.

On constate que les courbes 15' et 16' ont pour les grands numéros de trame, c'est-à-dire pour les faibles niveaux, une pente sensiblement plus importante que les courbes 15 et 16. Ainsi à faible niveau de signal la rémanence risque d'être insuffisante.

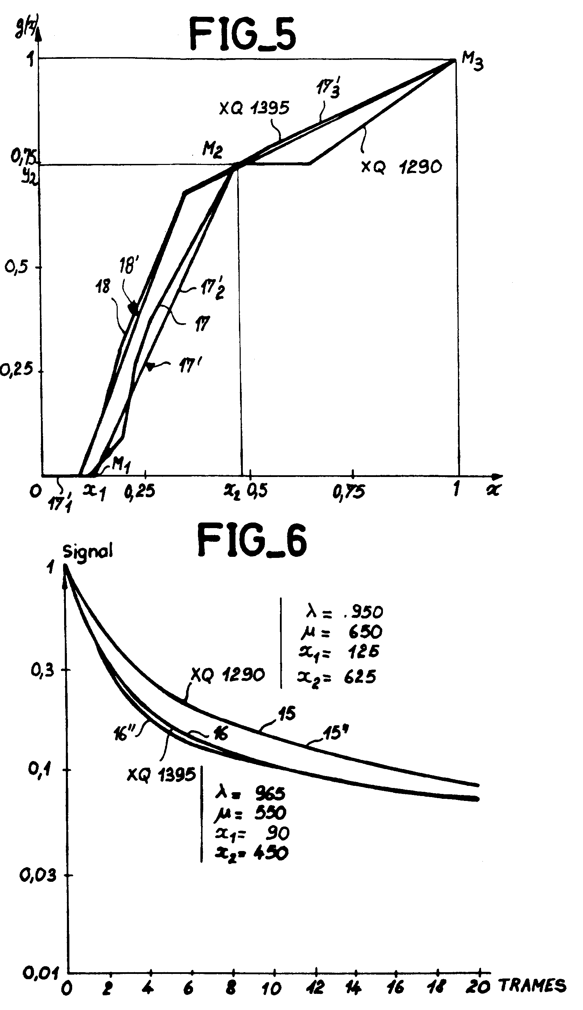

C'est pourquoi on préfère une approximation de la fonction g (x) du type de celle représentée sur la figure 5 qui est un diagramme analogue de celui de la figure 3 et sur lequel on a reporté les courbes 17 et 18 représentant les fonctions g (x) pour les tubes vidicon XQ 1290 et XQ 1395 et on a tracé les courbes 17' et 18' dont chacune est formée de trois segments et constitue une approximation d'une courbe, 17 ou 18. Ainsi la courbe 17' présente un premier segment $17'_1$ sur l'axe des abscisses délimité par l'origine O et le point $M_1$ d'abscisse $x_1$. Le second segment $17'_2$ est un segment de droite dont les points d'extrémité sont, d'une part, le point $M_1$ et, d'autre part, un point $M_2$ de coordonnées $x_2$ et $y_2$. Le troisième segment $17'_3$ relie le point $M_2$ au point $M_3$ de coordonnées : x = 1, y = 1.

Autrement dit, cette approximation de la courbe g (x) peut être définie de la façon suivante :

$$o \le x \le x_1 \qquad g\,(x) = 0 \tag{20}$$

$$x_1 \le x \le x_2 \qquad g\,(x) = \frac{(x - x_1)\,y_2}{x_2 - x_1} \tag{21}$$

$$x_2 \le x \le 1 \qquad g\,(x) = \frac{(x - x_2)(1\text{-}y_2)}{1\text{-}x_2} + y_2 \tag{22}$$

Le résultat obtenu avec une telle approximation est tout à fait satisfaisant car la loi de rémanence obtenue de cette manière est pratiquement identique à la loi de rémanence pour le tube vidicon.

Pour cette approximation on fait appel à cinq paramètres : $\lambda\mu$, $x_1$, $x_2$ et $y_2$.

On peut simplifier cette approximation en ne mettant en oeuvre que quatre paramètres. Cette approximation consiste à disposer le segment $17'_3$ ($M_2\,M_3$) avec une direction parallèle à l'axe des abscisses. Autrement dit, le point $M_2$ a alors pour coordonnées $x_2$ et 1.

Dans ce cas g (x) est défini par les formules suivantes :

EP 0 263 730 B1

$$o \leq x \leq x_1 \quad g(x) = 0 \qquad (23)$$

$$x_1 \leq x \leq x_2 \quad g(x) = \frac{x - x_1}{x_2 - x_1} \qquad (24)$$

$$x_2 \leq x \leq 1 \quad g(x) = 1 \qquad (25)$$

Dans ce cas les quatre paramètres $\lambda$, $\mu$, $x_1$ et $x_2$, qui définissent le filtre récursif ont tous une signification physique : $\lambda$ est la rémanence à faible niveau, $\mu$ la rémanence à fort niveau, $x_1$ est la limite supérieure des faibles niveaux et $x_2$ la limite inférieure des forts niveaux.

Le diagramme de la figure 6 correspond à cette approximation. Il est analogue à celui de la figure 2. On a d'ailleurs reporté les courbes 15 et 16 sur cette figure 6. La courbe 15", correspondant à l'approximation pour le tube vidicon XO 1290, est confondue avec la courbe 15. Pour la courbe 16" correspondant à la simulation du tube XQ 1395 la différence de comportement est pratiquement négligeable.

Pour réaliser les modulateurs 10 et 12 (figure 1) on utilise par exemple des mémoires du type table de correspondance.

Pour la mémoire ou table 10, la fonction $f_1(x)$ est (dans le cas de l'approximation de g (x) sur 3 segments dont le dernier est parallèle à l'axe des abscisses) :

$$f_1(x) = x [(1 - \lambda)(1 - g(x)) + (1 - \mu) g(x)] \qquad (26)$$

Pour le module ou table 12 la fonction $f_2(x)$ est:

$$f_2(x) = x [\lambda(1 - g(x)) + \mu g(x)] \qquad (27)$$

On sait que les signaux vidéo transmis à un moniteur de télévision doivent présenter une correction de gamma. Cette correction de gamma est soit effectuée avant le filtre, c'est-à-dire avant l'entrée $10_1$, soit effectuée dans le filtre lui-même par modification du modulateur 10, c'est-à-dire de la seule fonction $f_1$. Dans ce cas, au lieu de prendre pour la fonction $f_1$ celle qui est par exemple définie ci-dessus en (26) on utilise la fonction :

$$f\mu(x) = f_1[\mu(x)] \qquad (28)$$

Dans cette formule $\mu(x)$ est la correction de gamma.

Enfin, on a constaté que, sous certaines conditions et dans certains cas, notamment avec un filtre récursif défini à partir de la fonction g (x) à trois segments dont le troisième segment $M_2 M_3$ est parallèle à l'axe des abscisses, on obtenait une saturation gênante du signal, c'est-à-dire que le signal de valeur maximum en sortie peut dépasser la valeur 1. Une telle situation intervient notamment lors d'une transition brusque de 0 à 1. Pour remédier à cet inconvénient, c'est-à-dire pour que le signal de sortie y reste toujours inférieur à 1 on a calculé que les quatre paramètres $\lambda$, $\mu$, $x_1$ et $x_2$ qui définissent le filtre récursif doivent satisfaire aux conditions suivantes :

Si :

$$\frac{x_1}{x_\mu} \leq 1 - \sqrt{1 - \frac{x_2}{x_\mu}}$$

il faut :

$$\frac{\mu}{\lambda} \geqslant \frac{1}{\left(1 + \frac{x_2 - x_1}{2}\right) \cdot \left(1 + \frac{\sqrt{1 - \frac{x_2}{x_\mu}}}{1 - \sqrt{1 - \frac{x_2}{x_\mu}}}\right)}$$

6

Si :

$$\frac{x_1}{x_\mu} \geq 1 - \sqrt{1 - \frac{x_2}{x_\mu}}$$

il faut:

$$\frac{\mu}{\lambda} \geq \frac{x_1}{x_\mu}$$

Dans ces formules $x_\mu$ est la valeur maximum du signal x.

**Revendications**

1. Installation d'imagerie, notamment pour la radiologie de type numérique, comprenant une caméra de télévision à élément de prise de vues sans rémanence ou à faible rémanence, avec un moyen, tel qu'un filtre récursif (10, 11, 12, 13), pour produire une rémanence du signal d'images fourni par la caméra, caractérisée en ce que le moyen est tel que la rémanence varie avec le niveau du signal.

2. Installation selon la revendication 1 caractérisée en ce que la rémanence est la plus importante pour les faibles niveaux du signal.

3. Installation selon la revendication 2 caractérisée en ce que le moyen introduisant une rémanence est tel que l'ensemble formé par la caméra et ce moyen a le même comportement de rémanence qu'un tube de type vidicon ou chalnicon.

4. Installation selon la revendication 2 ou 3 comprenant un filtre récursif présentant un modulateur (10) du signal d'entrée relié à une première entrée ($11_1$) d'un additionneur (11) dont la sortie ($11_3$), qui constitue la sortie du filtre, est reliée à une mémoire de trame (13) connectée à la seconde entrée ($11_2$) de l'additionneur par l'intermédiaire d'un second modulateur (12), caractérisée en ce qu'on choisit les fonctions ($f_1$ et $f_2$) des premier (10) et second modulateurs (12) de façon à conférer ladite rémanence variable avec le niveau du signal.

5. Installation selon la revendication 4 caractérisée en ce que la modulation $f_2$ introduite par le second modulateur (12) est définie par la fonction :

$$f_2(x) = x[\lambda(1 - g(x)) + \mu g(x)], \tag{8}$$

formule dans laquelle x est le rapport du signal appliqué sur l'entrée du second modulateur à la valeur maximum du signal d'entrée, $\lambda$ et $\mu$ sont des constantes, et g(x) est une fonction linéaire de X, satisfaisant aux conditions : g(0) = 0 , et g(1) = 1.

6. Installation selon la revendication 5 caractérisée en ce que :

$$g(x) = x$$

7. Installation selon la revendication 5 caractérisée en ce que la fonction g(x) est définie de la façon suivante :

$$0 \leq x \leq x_1 \qquad g = 0 \tag{20}$$

$$x_1 \leq x \leq x_2 \qquad g = \frac{(x - x_1)y_2}{x_2 - x_1} \tag{21}$$

$$x_2 \leq x \leq 1 \qquad g = \frac{(x - x_2)(1 - y_2)}{1 - x_2} + y_2 \tag{22}$$

$x_1$, $x_2$ et $y_2$ étant des constantes.

8. Installation selon la revendication 5 caractérisée en ce que la fonction g(x) est définie de la façon suivante :

7

$$0 \leq x \leq x_1 \qquad g = 0 \qquad\qquad (23)$$

$$x_1 \leq x \leq x_2 \qquad g = \frac{x - x_1}{x_2 - x_1} \qquad\qquad (24)$$

$$x_2 \leq x \leq 1 \qquad g = 1 \qquad\qquad (25)$$

$x_1$ et $x_2$ étant des constantes.

9. Installation selon l'une quelconque des revendications 4 à 8 caractérisée en ce que la fonction $f_1$ du premier modulateur (10) contient la correction de gamma.

10. Installation selon l'une quelconque des revendications précédentes caractérisée en ce que la caméra comporte un tube de type plumbicon ou saticon.

11. Filtre récursif pour installation selon l'une quelconque des revendications précédentes.

**Claims**

1. Imaging installation, in particular for digital radiology, including a television camera with an imaging component without remanence, with a recursive filter (10, 11, 12, 13), for producing artificial remanence of the image signal supplied by the camera, characterised in that the recursive filter is such that the artificial remanence varies with the level of the signal.

2. Installation according to claim 1, characterised in that the artificial remanence is greatest for low levels of the signal.

3. Installation according to claim 2, characterised in that the recursive filter introducing said artificial remanence is such that the combination of the camera and the recursive filter has the same remanence behaviour as a vidicon or chalnicon type tube.

4. Installation according to claim 2 or claim 3 wherein the recursive filter has an input signal modulator (10) connected to a first input ($11_1$) of an adder (11) whose output ($11_3$), which constitutes the output of the filter, is connected to a frame store (13) connected to the second input ($11_2$) of the adder via a second modulator (12), characterised in that the functions ($f_1$ and $f_2$) of the first and second modulators (10, 12) are chosen to confer said artificial remanence varying with the level of the signal.

5. Installation according to claim 4, characterised in that the modulation $f_2$ introduced by the second modulator (12) is defined by the function;

$$f_2(x) = x [\lambda(1 - g(x)) + \mu\, g(x)], \qquad\qquad (8)$$

in which equation x is the ratio of the signal applied to the input of the second modulator to the maximum value of the input signal, $\lambda$ and $\mu$ are constants, and g(x) is a linear function of x satisfying the conditions;
g (0) = 0, and g (1) = 1.

6. Installation according to claim 5, characterised in that:

$$g(x) = x.$$

7. Installation according to claim 5, characterised in that the function g(x) is defined in the following manner:

$$0 \leq x \leq x_1 \qquad g = 0 \qquad\qquad (20)$$

$$x_1 \leq x \leq x_2 \qquad g = \frac{(x - x_1)y_2}{x_2 - x_1} \qquad\qquad (21)$$

$$x_2 \leq x \leq 1 \qquad g = \frac{(x-x_2)(1-y_2)}{1-x_2} + y_2 \qquad (22)$$

$x_1$, $x_2$ and $y_2$ being constants.

8. Installation according to claim 5, characterised in that the function g(x) is defined as follows:

$$0 \leq x \leq x_1 \quad g = 0 \qquad (23)$$

$$x_1 \leq x \leq x_2 \quad g = \frac{(x-x_1)}{x_2-x_1} \qquad (24)$$

$$x_2 \leq x \leq 1 \quad g = 1 \qquad (25)$$

$x_1$ and $x_2$ being constants.

9. Installation according to any of claims 4 to 8, characterised in that the function $f_1$ of the first modulator (10) contains the gamma correction.

10. Installation according to any of the preceding claims, characterised in that the camera includes a plumbicon or saticon type tube.

11. Recursive filter for installation according to any preceding claim.

**Patentansprüche**

1. Einrichtung zur Bildgebung, insbesondere für die digitale Radiologie, enthaltend eine Televisionskamera mit einer bildgebenden Komponente ohne Remanenz, mit einem Rekursivfilter (10, 11, 12, 13) zum Erzeugen einer künstlichen Remanenz des von der Kamera gelieferten Bildsignals, dadurch gekennzeichnet, daß das Rekursivfilter der Art ist, daß die künstliche Remanenz sich mit dem Wert des Signals ändert.

2. Einrichtung nach Anspruch 1, dadurch gekennzeichnet, daß die künstliche Remanenz für kleine Werte des Signals am grössten ist.

3. Einrichtung nach Anspruch 2, dadurch gekennzeichnet, daß das die künstliche Remanenz einführende Rekursivfilter der Art ist, daß die Kombination aus der Kamera und dem Rekursivfilter das gleiche Remanenzverhalten hat wie eine Röhre des Typs Vidicon oder Chalnicon.

4. Einrichtung nach Anspruch 2 oder 3, wobei das Rekursivfilter einen Eingangssignalmodulator (10) hat, der mit einem ersten Eingang ($11_1$) von einem Addierer (11) verbunden ist, dessen Ausgang ($11_3$), der den Ausgang des Filters bildet, mit einem Bildspeicher (13) verbunden ist, der mit dem zweiten Eingang ($11_2$) des Addierers über einen zweiten Modulator (12) verbunden ist, dadurch gekennzeichnet, daß die Funktionen ($f_1$ und $f_2$) der ersten und zweiten Modulatoren (10, 12) so gewählt sind, daμ sie der künstlichen Remanenz den sich ändernden Signalwert erteilen.

5. Einrichtung nach Anspruch 4, dadurch gekennzeichnet, daß die Modulation $f_2$, die durch den zweiten Modulator (12) eingeführt wird, durch die Gleichung definiert ist:

$$f_2(x) = x[\lambda(1 - g(x)) + \mu g(x)] \qquad (8)$$

wobei in der Gleichung x das Verhältnis des Signals, das an den Eingang des zweiten Modulators angelegt ist, zu dem maximalen Wert des Eingangssignals ist, $\lambda$ und $\mu$ Konstanten sind und g(x) eine lineare Funktion von x ist, die die Bedingungen erfüllt:
g(0) = 0 und g(1) = 1.

6. Einrichtung nach Anspruch 5, dadurch gekennzeichnet, daß gilt:

$$g(x) = x.$$

7. Einrichtung nach Anspruch 5, dadurch gekennzeichnet, daß die Funktion g(x) in der folgenden Art und Weise definiert ist:

$$0 \le x \le x_1 \qquad g = 0 \tag{20}$$

$$x_1 \le x \le x_2 \qquad g = \frac{(x-x_1)y_2}{x_2-x_1} \tag{21}$$

$$x_2 \le x \le 1 \qquad g = \frac{(x-x_2)(1-y_2)}{1-x_2} - y_2 \tag{22}$$

wobei $x_1$, $x_2$ und $y_2$ Konstanten sind.

8. Einrichtung nach Anspruch 5, dadurch gekennzeichnet, daß die Funktion g(x) wie folgt definiert ist:

$$0 \le x \le x_1 \qquad g = 0 \tag{23}$$

$$x_1 \le x \le x_2 \qquad g = \frac{(x-x_1)}{x_2-x_1} \tag{24}$$

$$x_2 \le x \le 1 \qquad g = 1 \tag{25}$$

wobei $x_1$ und $x_2$ Konstanten sind.

9. Einrichtung nach einem der Ansprüche 4 bis 8, dadurch gekennzeichnet, daß die Funktion $f_1$ des ersten Modulators (10) eine Gamma-Korrektur enthält.

10. Einrichtung nach einem der vorstehenden Ansprüche, dadurch gekennzeichnet, daß die Kamera eine Röhre des Typs Plumbicon oder Saticon enthält.

11. Rekursivfilter für eine Einrichtung nach einem der vorstehenden Ansprüche.

FIG_1

FIG_2

# FIG_3

# FIG_4

# FIG_5

# FIG_6